# EUROPEAN PATENT APPLICATION

(11) **EP 1 202 280 A2**
(43) Date of publication of application: **02.05.2002**
(21) Application number: 01125576.7
(22) Date of filing: 25.10.2001
(51) Int. Cl.: G11B 33/08

(54) **Hard disk drive mounting bracket for noise and vibration control**

(30) Priority: 25.10.2000 US 243457 P; 30.03.2001 US 280095 P
(71) Applicant: Material Sciences Corporation, Elk Grove Village, Illinois 60007-5995 (US)
(72) Inventor: Boss, Daniel E., Grayslake, IL 60030 (US); Williams, Richard K., Chicago, IL 60657 (US); Nashif, Ahid, Cincinnati, OH 45242 (US); Pardus, Gregory, Darien, IL 60561 (US); Uslander, Ira J., Glenview, IL 60025 (US)
(74) Representative: Wehnert, Werner, Dipl.-Ing. Patentanwälte Hauck, Graalfs, Wehnert, Döring, Siemons

(57) **Abstract**

A channel-shaped support bracket for a disk drive assembly has a base wall, opposed side walls and flanges respectively extending outwardly from the side walls. The bracket is formed of a laminate of a viscoelastic layer sandwiched between two metal layers for vibration damping. The disk drive assembly has a printed circuit board on one side thereof. The flanges have holes for receiving fasteners to mount the bracket on an associated substrate. The disk drive assembly is mounted with the printed circuit board facing the base wall of the bracket. It may be disposed between the side walls, being either mounted on the side walls and spaced from the base wall or mounted against the base wall, or may be mounted on the opposite surface of the base wall. End walls may be provided extending from the base wall in a direction opposite from the direction in which the side walls extend. Fasteners extend through openings in the walls and may be cushioned with rubber grommets.

## Description

### Cross-Reference to Related Applications

This application claims the benefit of the filing date of copending U.S. Provisional Application nos. 60/280,095, filed March 30, 2001 and 60/243,457, filed October 25, 2000.

### Background

This application relates to hard disk drives of the type used for digitally recording information such as audio, video or other types of digital data. Such hard disk drives have been incorporated into electronic devices, known as "set top boxes," and are also used in computers and other types of electronic devices. Currently, such drives are commonly attached to a steel bracket which is, in turn, fastened to the chassis of the set top box or other device. A problem with such set top boxes has been noise emission. Such noise is typically a combination of airborne noise from the disk drive and noise caused by structurally borne vibrations transmitted from the disk drive to other set top box components, including the mounting bracket, chassis, top cover and circuit boards. Various approaches have been taken to reduce noise and vibration in such devices. Prior treatments have included isolating the disk drive from surrounding components with rubber grommets, damping the vibration with add-on treatments, using foam to absorb airborne noise and blocking noise by attaching a shield to the printed circuit board side of the disk drive. Such treatments contribute significantly to the overall cost of the device, and often are not effective, even in reducing noise to the level of a stand-alone hard disk drive.

### Summary

This application is directed to a mounting arrangement for a hard disk drive which avoids disadvantages of prior arrangements while affording additional structural and operating advantages.

An important aspect is the provision of a mounting arrangement which effectively reduces propagation of noise and vibration from a hard disk drive.

Another aspect is the provision of an arrangement of the type set forth, which is of simple and economical construction and does not significantly add to the overall cost of the hard disk drive or the device in which it is used.

Another aspect is the provision of a mounting arrangement of the type set forth which minimizes the number of parts utilized.

The mounting arrangement consists of certain novel features and a combination of parts hereinafter fully described and illustrated in the accompanying drawings, it being understood that various changes in the details may be made without departing from the spirit, or sacrificing any of the advantages of the disclosed embodiment.

### Brief Description of the Drawings

For the purpose of facilitating an understanding of the mounting arrangement, there is illustrated in the accompanying drawings a preferred embodiment thereof, from an inspection of which, when considered in connection with the following description, the mounting arrangement, its construction and operation, and many of its advantages should be readily understood and appreciated.
FIG. 1 is a front elevational view of a mounting bracket for a hard disk drive;
FIG. 2 is a front elevational view of a hard disk drive mounted on the bracket of FIG. 1;
FIG. 3 is a perspective view of the bracket of FIG. 2;
FIG. 4 is an enlarged, fragmentary, sectional view of a portion of the mounting bracket of FIG. 3;
FIG. 5 is a perspective view of another mounting bracket;
FIG. 6 is a front elevational view of a hard disk drive mounted on the bracket of FIG. 5;
FIG. 7 is a view similar to FIG. 6, illustrating an alternative mounting position of the hard disk drive;
FIG. 8 is a perspective view of still another mounting bracket; and
FIG. 9 is a front elevational view of the bracket of FIG. 9 with a hard disk drive mounted thereon.

### Detailed Description

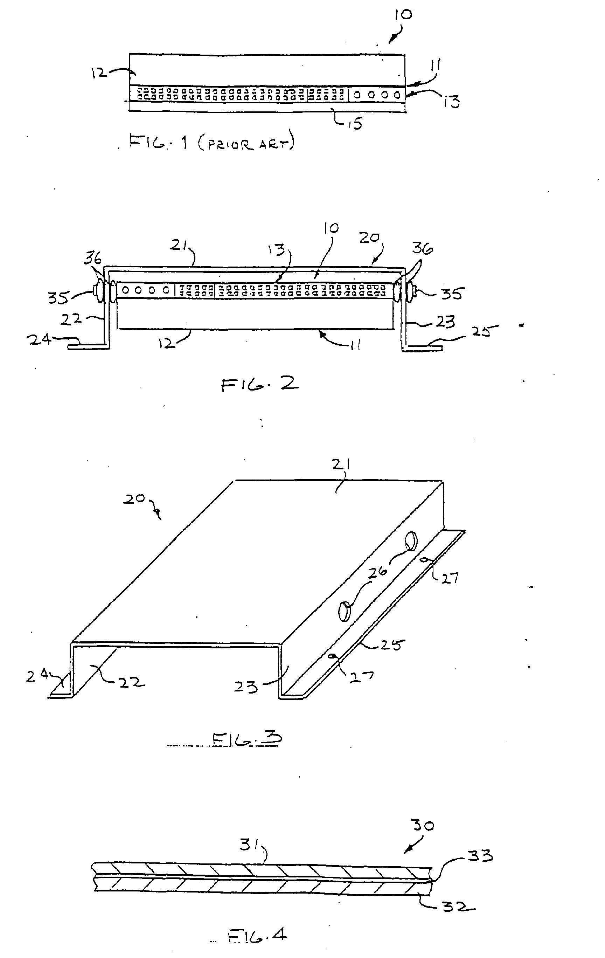

Referring to FIGS. 1 and 2, there is illustrated a hard disk drive, generally designated by the numeral 10, which has a housing 11 and includes a main drive mechanism 12 and a printed circuit board ("PCB"), the connector pins for which are shown at 13, mounted on what is normally the underside of the main drive mechanism 12. It has been found that in typical hard disk drives, noise emitted from the PCB side of the disk drive 10 is greater than that emitted from the top side of the housing 11. Heretofore, this printed circuit board noise has typically been reduced by attaching a metal and foam shield 15 to the bottom of the housing 11 to block emission of the PCB noise. This, of course, adds an additional part to the assembly and adds to the overall expense of the device.

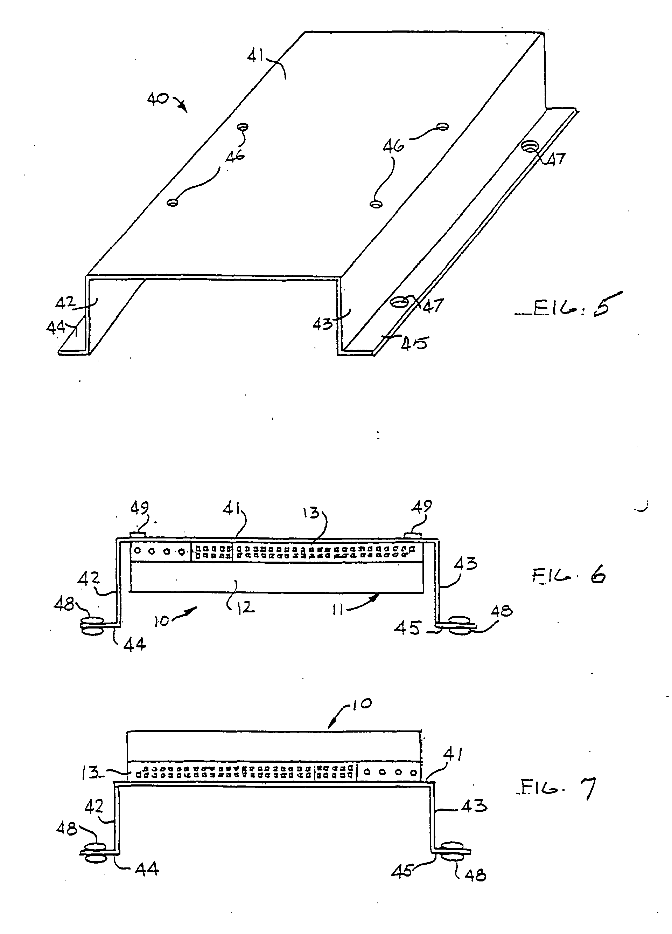

Referring to FIGS. 2 and 3, there is illustrated a mounting bracket 20 for supporting the hard disk drive 10 and for damping noise and vibration emitted therefrom. The bracket 20 is generally channel-shaped, having a rectangular main panel 21 integral along the opposite side edges thereof with rectangular, depending side walls 22 and 23 which are, in turn, respectively integral at their lower edges with outturned rectangular attachment flanges 24 and 25. Formed through each of the side walls 22 and 23 is a pair of longitudinally spaced-apart, circular apertures 26 and formed through each of the attachment flanges 24 and 25 is a pair of longitudinally spaced-apart, small circular holes 27.

A significant feature is the material of construction of the bracket 20. In order to function effectively, the bracket must not contribute to noise or vibration. Contribution will occur if the bracket 20 is forced into resonance by amplified vibrations transmitted from the hard disk drive 10 to the bracket 20. In order to avoid amplifying vibrations, the bracket 20 is formed of a material which has adequate strength and rigidity, while damping noise and vibrations. Referring to FIG. 4, preferably, the bracket 20 is formed of a damped metal laminate material 30, which includes outer metal skins or layers 31 and 32, constraining therebetween a thin core 33 of viscoelastic material. Such damped metal laminate material is sold by Material Sciences Corporation, and may have outer metal layers 31 and 32 of substantially the same thickness, which may vary, depending upon the application, the viscoelastic core 33 typically being substantially thinner.

Referring to FIG. 2, in use, the hard disk drive 10 is disposed beneath the main panel 21 of the bracket 20 and is supported on the side walls 22 and 23 thereof by suitable mounting screws 35 extending through the apertures 26, the bracket 20 being isolated from the hard disk drive 10 by the use of isolating grommets 36, respectively disposed on the inner and outer sides of the side walls 22 and 23 and receiving the screws 35 therethrough. The grommets 36 may be constructed of a soft rubber material, preferably having a high damping characteristic. The bracket 20 is mounted in place in the associated set top box or other device by suitable fasteners (not shown) received through the holes 27 in the attachment flanges 24 and 25.

It is a significant aspect that the hard disk drive 10 is mounted in an inverted position on the bracket 20, with the PCB13 facing upwardly and disposed closely adjacent to the inner surface of the main panel 21. Thus, the main panel 21 serves as a shield for noise and vibrations emitted from the PCB side of the disk drive and obviates the use of a separate shield.

Referring now to FIGS. 5-7, there is illustrated a mounting bracket 40 for supporting the hard disk drive 10 and damping noise and vibration emitted therefrom. The bracket 40 may be formed of the same material 30 described above in connection with FIGS. 1-4 and is generally channel-shaped, having a rectangular main panel 41 integral along the opposite side edges thereof with rectangular, depending side walls 42 and 43 which are, in turn, respectively integral at their lower edges with outturned rectangular attachment flanges 44 and 45. Formed through the main panel 41 are two pairs of longitudinally spaced-apart, circular apertures 46 and formed through each of the attachment flanges 44 and 45 is a pair of longitudinally spaced-apart, circular holes 47.

Referring to FIG. 6, in use, the hard disk drive 10 is disposed beneath the main panel 41 of the bracket 40 and is supported on the main panel 41 by suitable mounting screws 49 extending through the apertures 46. The bracket 40 is mounted in place in the associated set top box or other device by suitable fasteners (not shown) received through the holes 47 in the attachment flanges 44 and 45. The fasteners may be isolated from the bracket 40 by the use of isolating grommets 48, respectively disposed in the holes 47 and receiving the fasteners therethrough. The grommets 48 may be constructed of a soft rubber material, preferably having a high damping characteristic.

It is a significant aspect that the hard disk drive 10 is mounted in an inverted position on the bracket 40, with the PCB facing upwardly and disposed against the inner surface of the main panel 41. Thus, the main panel 41 serves as a shield for noise and vibrations emitted from the PCB side of the disk drive 10 and obviates the use of a separate shield.

Referring to FIG. 7, there is illustrated an alternative mounting arrangement, wherein the hard disk drive 10 is mounted in an upright position on the upper surface of the main panel 41 of the bracket 40. The hard disk drive 10 may, again, be secured in place by suitable fasteners screwed through the apertures 46 into the PCB of the hard disk drive.

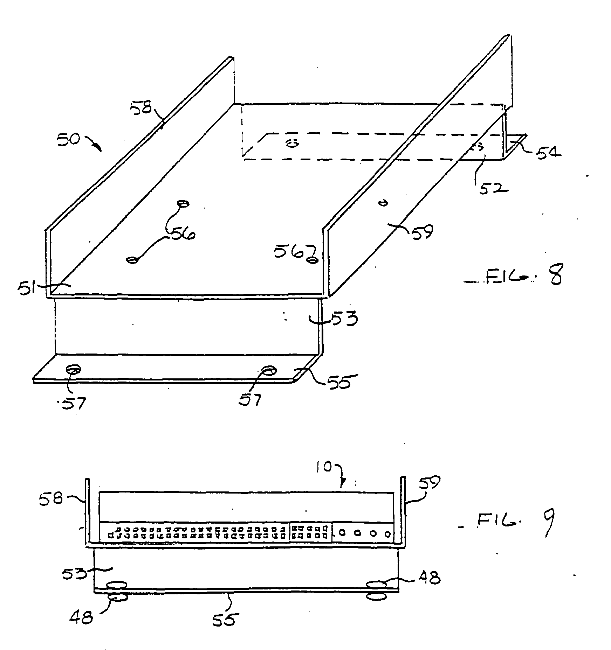

Referring to FIGS. 8 and 9, there is illustrated an alternative mounting bracket 50 for supporting the hard disk drive 10. The bracket 50 is generally channel-shaped, having a rectangular main panel 51 integral along the opposite end edges thereof with rectangular, depending end walls 52 and 53 which are, in turn, respectively integral at their lower edges with outgunned rectangular attachment flanges 54 and 55. Formed through the main panel 51 are two pairs of longitudinally spaced-apart, circular apertures 56 and formed through each of the attachment flanges 54 and 55 is a pair of longitudinally spaced-apart circular holes 57. Integral with the opposite side edges of the main panel 51 and extending upwardly therefrom are rectangular side walls 58 and 59. The bracket 50 may be made of the same material as the bracket 40 described above.

In use, the hard disk drive 10 is mounted on the upper surface of the main panel 51 between the side walls 58 and 59, being secured in place by suitable fasteners extending through the apertures 56, as described above in connection with the bracket 40. The bracket 50 is mounted on the associated set top box or other device by the use of suitable fasteners (not shown) extending through the holes 57 and being isolated by isolating grommets 48, in the same manner described above for the bracket 40.

By use of any of the mounting brackets 20, 40 or 50, the PCB shield 15, typically used in the prior art, can be eliminated with minimal increase in system noise. An additional benefit of the use of either of the mounting bracket 40 or 50 is that it serves as a heat sink for improved heat dissipation from the PCB of the drive 10. Because of its close proximity to the bracket, heat from the hard disk drive 10 can be transferred more efficiently into the bracket. As a result, the steady-state temperature of the hard disk drive 10 decreases. Lower drive temperatures can eliminate the need for a cooling fan and contribute to longer drive life.

If desired, high emissivity coatings or films could be used on the inside and/or outside surfaces of the bracket 40 or 50 to improve radiant heat transfer, and assist the heat sinking effect of the bracket 40. Also, application of an electrically insulating coating or film to the inside of the bracket 40 or 50 could be utilized. Such a layer would protect against short-circuiting caused by accidental contact between the circuit board and the conductive bracket 40 or 50. Placement of a thin foam layer between the bracket and the PCB could also be used, if desired. Such a foam layer would serve the dual purpose of acoustical absorption and electrical insulation.

It will be appreciated that, in lieu of the damped laminate material 30, damping could be achieved by using a standard metal bracket with an add-on treatment, consisting of a low-modulus material adhered to either the inner surface or the outer surface of the bracket 20, 40 or 50, and constrained by a higher-modulus outer layer. The add-on treatment could also be a mastic (a polymer material filled with a high-density powder) or an all-polymeric treatment.

Also, in order to achieve even greater noise reduction with any of the brackets 20, 40 and 50, a shield 15 could be added over the PCB side of the housing 11, as in FIG. 1.

The matter set forth in the foregoing description and accompanying drawings is offered by way of illustration only and not as a limitation. While particular embodiments have been shown and described, it will be obvious to those skilled in the art that changes and modifications maybe made without departing from the broader aspects of applicants' contribution. The actual scope of the protection sought is intended to be defined in the following claims when viewed in their proper perspective based on the prior art.

## Claims

1. A bracket for supporting a disk drive assembly comprising:
a laminated body of sheet material having two outer layers formed of metal and an inner layer formed of a viscoelastic material and joining the outer layers,
the body being formed into a generally channel-shaped configuration having a base wall and two side walls extending from opposed sides of the base wall and two flanges respectively extending from the side walls,
at least one of the base wall and the side walls having openings therethrough.

2. The bracket of claim 1, wherein each of the walls is a flat, substantially rectangular wall.

3. The bracket of claim 1, wherein the openings are formed in each of the base wall and the side walls.

4. The bracket of claim 1, wherein each of the flanges has a plurality of openings therethrough.

5. The bracket of claim 1, and further comprising end walls integral with the base wall and extending therefrom.

6. The bracket of claim 5, wherein the side walls extend from the base wall in a first direction and the end walls extend from the base wall in a direction opposite to the first direction.

7. In combination:
a bracket including a laminated body of sheet material having two outer layers formed of metal and an inner layer formed of a viscoelastic material and joining the outer layers,
the body being formed into a generally channel-shaped configuration having a base wall and two side walls extending from opposed sides of the base wall and two flanges respectively extending from the side walls,
at least one of the base wall and the side walls having openings therethrough;
a disk drive assembly; and
a plurality of fasteners respectively received through the openings and engageable with the disk drive assembly for supporting the disk drive assembly on the bracket so that the bracket will damp vibrations emanating from the disk drive assembly.

8. The combination of claim 7 wherein the disk drive assembly is spaced from the base wall.

9. The combination of claim 8 , wherein the openings are formed in each of the side walls.

10. The combination of claim 7,wherein the disk drive assembly is in contact with the base wall.

11. The combination of claim 10, wherein the base wall has opposed surfaces with the side walls extending from one of the surfaces, the disk drive assembly having a printed circuit board on one side thereof disposed in contact with the one surface of the base wall.

12. The combination of claim 10, wherein the base wall has opposed surfaces with the side walls extending from one of the surfaces, the disk drive assembly having a printed circuit board on one side thereof disposed in contact with the other surface of the base wall.

13. The combination of claim 10, wherein the openings are formed in the base wall.

14. The combination of claim 7, wherein each of the flanges has a plurality of openings therethrough for fastening the bracket to an associated substrate.

15. The combination of claim 7, and further comprising elastomeric grommets encircling each fastener respectively on opposite sides of the wall through which the fastener extends.

16. A method of damping vibrations in a disk drive assembly having a printed circuit board on one side thereof, the method comprising:
providing a mounting bracket having a laminated body of sheet material with a viscoelastic inner layer joining two metal outer layers, wherein the body is formed into a generally channel-shaped configuration having a base wall and two side walls, and wherein at least one of the base wall and the side walls has openings therethrough, and
supporting the disk drive assembly on the bracket with the printed circuit board facing the base wall of the bracket by extending fasteners through the openings and engaging them with the disk drive assembly.

17. The method of claim 16, wherein the disk drive assembly is spaced from the base wall.

18. The method of claim 17, wherein the fasteners extend through openings in the side walls.

19. The method of claim 16, wherein the printed circuit board is disposed in contact with the base wall.

20. The method of claim 19, wherein the base wall has opposed surfaces and the side walls extend from one of the surfaces, the printed circuit board being disposed in contact with the one surface.

21. The method of claim 19, wherein the base wall has opposed surfaces and the side walls extend from one of the surfaces, the printed circuit board being disposed in contact with the other one of the base wall surfaces.

22. The method of claim 16, and further comprising cushioning each fastener with elastomeric grommets respectively disposed on opposite sides of the wall through which the fastener passes.
